# EUROPEAN PATENT APPLICATION

(11) **EP 3 435 350 A1**
(43) Date of publication of application: **30.01.2019**
(21) Application number: 17183857.6
(22) Date of filing: 28.07.2017
(51) Int. Cl.: G08C 17/02, G01S 3/783, G08C 23/04, H04N 5/645

(54) **APPARATUS FOR MOUNTING A DISPLAY SCREEN AND METHOD OF OPERATION**

(71) Applicant: Vestel Elektronik Sanayi ve Ticaret A.S., 45030 Manisa (TR)
(72) Inventor: DEMIR,, Murat, 45030 Manisa (TR); KAHRAMANOGLU,, Gürmen, 45030 Manisa (TR)
(74) Representative: Flint, Adam

(57) **Abstract**

Apparatus (1) for mounting a display screen (2) has a mount (3) for mounting the display screen (2) and a motor (4) for rotating the mount (3). A receiver (5) receives a wireless signal (6) transmitted by a wireless device (7). The receiver (5) is mounted so as to rotate with the mount (3). The intensity of a wireless signal (6) transmitted by the wireless device (7) and received at the receiver (5) is compared with a reference intensity. The motor (4) rotates the mount (3) in the case that the difference between the intensity of the wireless signal received at the receiver (5) and the reference intensity is greater than a threshold.

## Description

### Technical Field

The present disclosure relates to apparatus for mounting a display screen and a method of operation.

### Background

Many different types of display apparatus are arranged so as to be rotatable, including for example television sets, display monitors for computers, display apparatus for "signage" at airports, railway stations, etc. In some cases, the rotation is powered, using for example an electric motor.

### Summary

According to a first aspect disclosed herein, there is provided apparatus for mounting a display screen, the apparatus comprising:
a mount for mounting a display screen;
a motor for rotating the mount;
a receiver for receiving a wireless signal transmitted by a wireless device, the receiver being mounted so as to rotate with the mount; and
a processor constructed and arranged to compare the intensity of a wireless signal transmitted by a wireless device and received at the receiver with a reference intensity and to control the motor to rotate the mount in the case that the difference between the intensity of a said wireless signal received at the receiver and the reference intensity is greater than a threshold.

The threshold may be zero or may be small to avoid minor differences causing rotation of the mount. The wireless device may be for example a remote controller for the display screen.

In an example, the reference intensity corresponds to the intensity of a wireless signal that is received from a said wireless device at the receiver when the angle of incidence of the wireless signal is or is approximately 90°.

There may be for example an initial calibration process in which the user calibrates and sets the reference intensity by causing the wireless device to transmit a wireless signal to the receiver when the angle of incidence of the wireless signal is or is approximately 90°.

In an example, the processor is arranged:
to control the motor to rotate the mount from a first rotational position through a predetermined angle to a second rotational position in the case that the difference between the intensity of a said wireless signal received at the receiver when the mount is at the first rotational position and the reference intensity is greater than a threshold,
to compare the intensity of a wireless signal received at the receiver with a reference intensity when the mount is at the second rotational position, and
to control the motor to rotate the mount in the reverse direction towards the first rotational position in the case that the difference between the intensity of a said wireless signal received at the receiver and the reference intensity is greater at the second rotational position than at the first rotational position.

In this case, as the difference in the received intensity and the reference intensity has increased, the mount has been rotated in the "wrong" or "incorrect" direction (i.e. away from the wireless device), so the motor is controlled to rotate the mount back again. This allows for the fact that simple measurements and comparisons of intensity cannot of itself determine the direction (angle) of the wireless device relative to the receiver. Again, a threshold may be used in the determining whether the intensity of a said wireless signal received at the receiver and the reference intensity is greater at the second rotational position than at the first rotational position, so as to exclude minor differences.

In an example, on comparing the intensity of a wireless signal received at the receiver with a reference intensity when the mount is at the second rotational position, the processor is arranged to control the motor to further rotate the mount in the same direction from the second rotational position towards a third rotational position in the case that the difference between the intensity of a said wireless signal received at the receiver and the reference intensity is less at the second rotational position than at the first rotational position and greater than a threshold.

In this case, as the difference in the received intensity and the reference intensity has decreased on rotation of the mount to the second rotational position, the mount has been rotated in the "correct" direction (i.e. towards the wireless device). If however the difference between the received intensity and the reference intensity is still greater than a threshold when the mount is at the second rotational position, then the motor is controlled to rotate the mount further in the same direction towards a third rotational position. The process of checking and comparing the received intensity with a threshold can then be repeated.

In an example, the apparatus comprises a display screen formed integrally with the mount. This may be for example a display apparatus such as a computer monitor or a television set or the like. In such a case, one or both of the receiver and the processor may also be provided as part of the computer monitor or television set or the like. Alternatively, the mount may be a bracket or the like and a separate display apparatus including the display screen may be mounted on the mount.

According to a second aspect disclosed herein, there is provided a method of operating a rotatable display screen, the method comprising:
receiving at a receiver a wireless signal transmitted by a wireless device, the receiver being mounted so as to rotate with the display screen;
comparing the intensity of the received wireless signal with a reference intensity; and
rotating the display screen in the case that the difference between the intensity of the wireless signal received at the receiver and the reference intensity is greater than a threshold.

In an example, the reference intensity corresponds to the intensity of a wireless signal that is received from the wireless device at the receiver when the angle of incidence of the wireless signal is or is approximately 90°.

In an example, the method comprises:
rotating the display screen from a first rotational position through a predetermined angle to a second rotational position in the case that the difference between the intensity of the wireless signal received at the receiver when the display screen is at the first rotational position and the reference intensity is greater than a threshold,
comparing the intensity of a wireless signal received at the receiver with a reference intensity when the display screen is at the second rotational position, and
rotating the display screen in the reverse direction towards the first rotational position in the case that the difference between the intensity of the wireless signal received at the receiver and the reference intensity is greater at the second rotational position than at the first rotational position.

In an example, the method comprises, on comparing the intensity of the wireless signal received at the receiver with a reference intensity when the display screen is at the second rotational position, further rotating the display screen in the same direction from the second rotational position towards a third rotational position in the case that the difference between the intensity of the wireless signal received at the receiver and the reference intensity is less at the second rotational position than at the first rotational position and greater than a threshold.

### Brief Description of the Drawings

To assist understanding of the present disclosure and to show how embodiments may be put into effect, reference is made by way of example to the accompanying drawings in which:
Figure 1 shows schematically an example of a display apparatus and a wireless device in a number of different positions;
Figure 2 shows schematically another example of a display apparatus and a wireless device in a number of different positions; and
Figure 3 shows schematically an example of a wireless signal incident on a receiver.

### Detailed Description

Display apparatus is known in which the display apparatus is rotatable, including for example television sets, display monitors for computers, display apparatus for "signage" at airports, railway stations, etc. In some cases, the rotation is powered, using for example an electric motor.

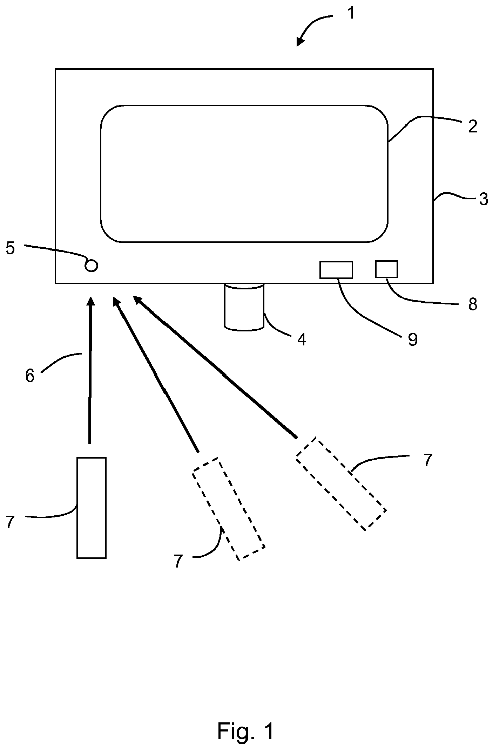

Figure 1 shows a first example of apparatus 1 for mounting a display screen, which in this case is a rotatable display apparatus 1 in accordance with an aspect described herein. The display apparatus 1 has a display screen 2 which is mounted in a mount 3. In the case of for example a television set or a computer monitor or signage or the like, the mount 3 provides a frame for supporting the display screen 2 and a housing for the usual circuit boards, power transformer, etc. A motor 4, which may be an electric motor, is provided so as to be able to rotate the display apparatus 1, typically in a horizontal plane. The motor 4 may for example be provided by the manufacturer as part of the display apparatus 1 or as a separate component which can be fixed to the display apparatus 1 by the end user.

In this example, the display apparatus 1 has a receiver 5 for receiving wireless signals 6 which are transmitted by a wireless device 7. The wireless device 7 may be a remote controller for generally controlling operation of the display apparatus 1, such as for changing display settings like brightness, contrast and colour, for changing inputs to the display apparatus 1, changing channels and/or volume levels, etc. in the case of the display apparatus 1 being a television set, etc. Alternatively, the wireless device 7 may be a separate controller, for example, principally or exclusively for controlling rotation of the display apparatus 1. Examples of different locations for the wireless device 7 are indicated by dashed lines. In this example, the display apparatus 1 has a processor 8 and data storage 9.

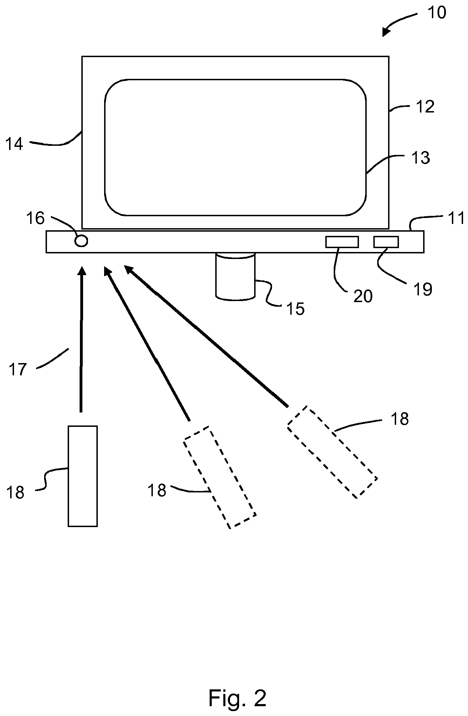

Figure 2 shows a second example of apparatus 10 for mounting a display screen in accordance with an aspect described herein. In this example, the apparatus 10 comprises a mount 11 on which a display apparatus 12 may be mounted. The display apparatus 12 includes a display screen 13, which may be mounted in a housing 14 for supporting the display screen 13 for housing the usual circuit boards, power transformer, etc.

A motor 15, which may be an electric motor, is provided so as to be able to rotate the mount 11 and therefore the display apparatus 12, typically in a horizontal plane. The motor 15 may be provided by the manufacturer as part of the mount 11 or as a separate component which can be fixed to the mount 11 by the end user.

In this example, the mount 11 has a receiver 16 for receiving wireless signals 17 which are transmitted by a wireless device 18. The wireless device 18 may again be a remote controller for generally controlling operation of the display apparatus 12, such as for changing display settings like brightness, contrast and colour, for changing inputs to the display apparatus 12, changing channels and/or volume levels, etc. in the case of the display apparatus 12 being a television set, etc. Alternatively, again, the wireless device 18 may be a separate controller, for example, principally or exclusively for controlling rotation of the mount 11. Examples of different locations for the wireless device 18 are again indicated by dashed lines. Furthermore, in this example the mount 11 has a processor 19 and data storage 20.

Operation of the two examples is similar. Accordingly, for simplicity, the following discussion will be made in respect of the first example, it being understood that the same or similar principles apply for the second example.

As a first step in an initial calibration process which operates under control of the processor 8 and which may be initiated by the user, the user positions the wireless device 7 so that it is substantially at 90° or normal to the plane of the display screen 2, i.e. is directly opposite the display screen 2, as indicated at the leftmost part in Figure 1. The user then causes the wireless device 7 to transmit a signal which is received at the receiver 5 of the display apparatus 1. The signal may be for example an infrared or other wireless signal. The processor 8 then obtains a measure of the intensity of the received signal which is stored in the data storage 9 and later used as a reference intensity. Because the wireless device 7 is substantially at 90° or normal to the plane of the display screen 2, this reference intensity is in effect the maximum intensity that is received at the receiver 5. (For completeness, it is mentioned that this ignores differences in intensity which may occur in practice owing to the wireless device 7 being at different distances from the receiver 5 from time to time. However, in practice, such differences are often small as, in practice, in many environments, the distance between the wireless device 7 and the receiver 5 is fairly constant.) If desired, the user can run the calibration process again to set a new reference intensity at a later time. This may be useful if for example the location of the display apparatus 1 is changed, or say furniture in a room is rearranged and users typically view the display apparatus 1 from new positions.

Then, in use, the user chooses to activate automatic rotation of the display apparatus 1. This can be achieved by sending a corresponding command to the processor 8 of the display apparatus 1, using for example some specific key or key combination on the wireless device 7 to transmit a command signal for receipt by the receiver 5.

At this point, the processor 8 compares the intensity of the wireless signal transmitted by the wireless device 7 and received at the receiver 5 with the reference intensity. In the case that the difference between the intensity of the wireless signal received at the receiver 5 and the reference intensity is greater than a threshold, the processor 8 controls the motor 4 to rotate the display apparatus 1. The threshold may be zero or some small amount. A non-zero threshold may be useful in avoiding minor differences in the intensities causing the motor 4 to be operated unnecessarily. In any event, a difference in the intensity of the wireless signal received at the receiver 5 and the reference intensity is taken as an indication that the wireless device 7 is not at 90° or normal to the plane of the display screen 2.

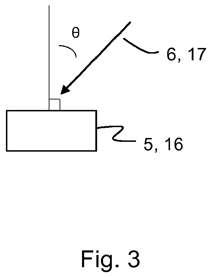

Referring briefly to Figure 3, this shows light 6, 17 incident on a receiver 5, 16. The angle of incidence of the light, which is measured from the normal to the receiver 5, 16, is indicated by θ. As will be well understood, in general the intensity of the light which is received at the receiver 5, 16 varies as cosine θ.

In some examples, this cosine variation of the intensity may be used by the processor 8 to determine how far from the 90° or normal the wireless device 7 was at the time the wireless device 7 transmitted the signal for receipt by the receiver 5, 16. However, this may not always be particularly accurate or convenient.

Accordingly, in other examples, on determining that the difference between the intensity of the wireless signal received at the receiver 5 and the reference intensity is greater than a threshold, the processor 8 sends a control signal to the motor 4 to cause the motor 4 to rotate the display apparatus 1 by a fixed amount. The rotation may be through 1 or 2 or 3 degrees or so, for example.

The initial direction of the rotation may be set so that it is always say clockwise (or counter-clockwise in other examples). This initial direction of rotation may be adjusted by the user.

Once the display apparatus 1 has been rotated through the initial rotation, the wireless device 7 transmits another signal for receipt by the receiver 5, 16. This further transmission by the wireless device 7 may be instigated manually by the user. Alternatively or additionally, further transmission by the wireless device 7 may be instigated under control of the processor 8, which causes a corresponding commanded to be sent to the wireless device 7 after the initial rotation of the display apparatus 1.

The processor 8 then compares the difference between the intensity of the further wireless signal received at the receiver 5 and the reference intensity. If the difference is less than the initial difference, then the processor knows that the display apparatus 1 has been rotated in the correct direction so as to be closer to normal to the wireless device 7. In addition, if the difference between the intensity of the further wireless signal received at the receiver 5 and the reference intensity is (still) greater than the threshold, then the processor 8 sends a control signal to the motor 4 to cause the motor 4 to rotate the display apparatus 1 by a fixed amount again, in the same direction. This may be repeated until the difference between the intensity of the further wireless signal received at the receiver 5 and the reference intensity is less than the threshold. At this point, in effect the display apparatus 1 has been rotated so as to be normal to the wireless device 7 (and therefore, by extension, to the viewer, who is assumed to be close to the wireless device 7).

On the other hand, if after the initial rotation, the difference between the intensity of the further wireless signal received at the receiver 5 and the reference intensity is greater than the initial difference, then the processor knows that the display apparatus 1 has been rotated in the incorrect direction (i.e. has been rotated to be further from to normal to the wireless device 7). In that case, the processor 8 sends a control signal to the motor 4 to cause the motor 4 to rotate the display apparatus 1 in the opposite direction by a fixed amount (which returns the display apparatus 1 to its initial position) and the further in that direction by a fixed amount.

The point here is that whilst the processor 8 may in effect be able to determine the angle of incidence of the signal received at the receiver 5 from the wireless device 7, that of itself does not give information about the position of the wireless device 7 relative to the display apparatus 1 (i.e. whether the wireless device 7 is to the left or the right of the normal in Figures 1 and 2 say). So, in this example, the display apparatus 1 is turned by a small amount in one direction in effect to see if that results in turning the display apparatus 1 towards the wireless device 7 or not, with subsequent steps as described above being carried out depending on whether the display apparatus 1 has been towards the wireless device 7 or not. As mentioned, the defaults initial direction of rotation may be changed by the user as an option.

Accordingly, the apparatus described herein can cause a display apparatus to be rotated automatically so as to face a wireless device, which may be for example a "remote controller" of the display apparatus, and therefore by extension to face a user or viewer of the display apparatus. The rotation may be carried out in a number of small steps.

The receiver 5, 16 may for example be or comprise a phototransistor. In a phototransistor, incident light is converted into electrical current. The internal resistance between the collector and the emitter of the phototransistor changes according to the intensity of the incident light, with the light intensity and resistance being inversely proportional. That is, as the light intensity increases, the internal resistance decreases. This change of internal resistance may be detected by applying load voltage and measuring the corresponding load current.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for mounting a display screen, the apparatus comprising:
a mount for mounting a display screen;
a motor for rotating the mount;
a receiver for receiving a wireless signal transmitted by a wireless device, the receiver being mounted so as to rotate with the mount; and
a processor constructed and arranged to compare the intensity of a wireless signal transmitted by a wireless device and received at the receiver with a reference intensity and to control the motor to rotate the mount in the case that the difference between the intensity of a said wireless signal received at the receiver and the reference intensity is greater than a threshold.

2. Apparatus according to claim 1, wherein the reference intensity corresponds to the intensity of a wireless signal that is received from a said wireless device at the receiver when the angle of incidence of the wireless signal is or is approximately 90°.

3. Apparatus according to claim 1 or claim 2, wherein the processor is arranged:
to control the motor to rotate the mount from a first rotational position through a predetermined angle to a second rotational position in the case that the difference between the intensity of a said wireless signal received at the receiver when the mount is at the first rotational position and the reference intensity is greater than a threshold,
to compare the intensity of a wireless signal received at the receiver with a reference intensity when the mount is at the second rotational position, and
to control the motor to rotate the mount in the reverse direction towards the first rotational position in the case that the difference between the intensity of a said wireless signal received at the receiver and the reference intensity is greater at the second rotational position than at the first rotational position.

4. Apparatus according to claim 3, wherein, on comparing the intensity of a wireless signal received at the receiver with a reference intensity when the mount is at the second rotational position, the processor is arranged to control the motor to further rotate the mount in the same direction from the second rotational position towards a third rotational position in the case that the difference between the intensity of a said wireless signal received at the receiver and the reference intensity is less at the second rotational position than at the first rotational position and greater than a threshold.

5. Apparatus according to any of claims 1 to 4, comprising a display screen formed integrally with the mount.

6. A method of operating a rotatable display screen, the method comprising:
receiving at a receiver a wireless signal transmitted by a wireless device, the receiver being mounted so as to rotate with the display screen;
comparing the intensity of the received wireless signal with a reference intensity; and
rotating the display screen in the case that the difference between the intensity of the wireless signal received at the receiver and the reference intensity is greater than a threshold.

7. A method according to claim 6, wherein the reference intensity corresponds to the intensity of a wireless signal that is received from the wireless device at the receiver when the angle of incidence of the wireless signal is or is approximately 90°.

8. A method according to claim 6 or claim 7, comprising:
rotating the display screen from a first rotational position through a predetermined angle to a second rotational position in the case that the difference between the intensity of the wireless signal received at the receiver when the display screen is at the first rotational position and the reference intensity is greater than a threshold,
comparing the intensity of a wireless signal received at the receiver with a reference intensity when the display screen is at the second rotational position, and
rotating the display screen in the reverse direction towards the first rotational position in the case that the difference between the intensity of the wireless signal received at the receiver and the reference intensity is greater at the second rotational position than at the first rotational position.

9. A method according to claim 8, comprising, on comparing the intensity of the wireless signal received at the receiver with a reference intensity when the display screen is at the second rotational position, further rotating the display screen in the same direction from the second rotational position towards a third rotational position in the case that the difference between the intensity of the wireless signal received at the receiver and the reference intensity is less at the second rotational position than at the first rotational position and greater than a threshold.
